# EUROPÄISCHE PATENTSCHRIFT

(11) **EP 0 839 425 B1**
(45) Veröffentlichungstag und Bekanntmachung des Hinweises auf die Patenterteilung: **22.09.2004**
(21) Anmeldenummer: 96923848.4
(22) Anmeldetag: 15.07.1996
(51) Int. Cl.: H04M 3/42, H04M 1/00

(54) **FUNKTIONALITÄT VON ENDGERÄTEN**
FUNCTIONALITY OF TERMINAL DEVICES
FONCTIONNALITE DE TERMINAUX

(30) Priorität: 18.07.1995 DE 19526219
(43) Veröffentlichungstag der Anmeldung: 06.05.1998
(73) Patentinhaber: SIEMENS AKTIENGESELLSCHAFT, 80333 München (DE)
(72) Erfinder: HORNUNG, Thomas, D-82223 Eichenau (DE)
(86) Internationale Anmeldenummer: PCT/DE1996/001285
(87) Internationale Veröffentlichungsnummer: WO 1997/004576

(56) Entgegenhaltungen:
- EP-A- 0 365 200
- US-A- 4 928 306
- US-A- 5 022 067
- US-A- 5 365 581
- US-A- 5 402 477

## Beschreibung

Die Erfindung betrifft ein Verfahren zur Festlegung von Leistungsmerkmalen für ein an einer Durchschalteeinheit angeschaltetes Endgerät.

Aus der US-PS 4 928 306 ist ein Verfahren zur -länderspezifischen- Einstellung eines Telefons beschrieben. Hierbei werden u. A. die Dämpfung für den Lautsprecher, die Verstärkung des Mikrofons sowie die Protokollvarianten für nationalen ISDN-Vorschriften eingestellt. Zur Durchführung werden zwischen der Nebenstellenanlage (PABX) und dem Telefon Informationen ausgetauscht.

Moderne Kommunikationsendgeräte, sowohl digitale als auch analoge, sind innerhalb einer Nebenstellenanlage über eine Peripherietechnik (peripheral processing) und eine nachgeschaltete Leitungstechnik (device handler) an einer Vermittlungstechnik (call processing) angeschaltet. Diese drei Baugruppen sind Bestandteil einer Durchschalteeinheit (switching unit) der Nebenstellenanlage. Der allgemeine Aufbau einer solchen Nebenstellenanlage ist in der Druckschrift "ISDN im Büro, HICOM, Sonderausgabe, Telcom Report und Siemens-Magazin Com" (ISDN 3-8009-3846-4) beschrieben (siehe dort insbesondere auf den Seiten 69 und 70).

Zum Abruf von Leistungsmerkmalen wird vom Endgerät eine entsprechende Aktivierungsmeldung an die Vermittlungstechnik gegeben, die daraufhin das gewünschte Leistungsmerkmal für das Endgerät zur Verfügung stellt. Solche Leistungsmerkmale sind beispielsweise Wahlwiederholung, Rückruf, Ruf-Weiterleitung, Makeln, Konferenz, Termin, Parken, Rufnummernspeicher, oder Bedienung eines Servers wie beispielsweise Voice-Mail, Text-Fax-Server, oder Anrufbeantworter. Durch die verwendbaren Leistungsmerkmale ist die Funktionalität des Endgerätes vorgegeben.

Bei den systemspezifischen Telefon-Endgeräten für private Nebenstellenanlage gibt es als Differenzierung zwischen verschiedenen Vermarktungskanälen und verschiedenen Benutzungsklassen eine Unterscheidung der Anschaltfähigkeit von diesen Endgeräten. Damit ist selbst bei sonst technisch gleichen Endgeräten eine Differenzierung hinsichtlich der Funktionalität, d.h. der Komfortstufen und damit auch der Preise gegeben.

Der Erfindung liegt die Aufgabe zugrunde, ein Verfahren anzugeben, durch das eine differenzierte Anschaltfähigkeit von technisch gleichen Endgeräten an verschiedene Durchschalteeinheiten ermöglicht wird.

Diese Aufgabe wird erfindungsgemäß durch die im Patentanspruch 1 angegebenen Merkmale gelöst.

Durch das erfindungsgemäße Verfahren ist sichergestellt, daß bestimmte Gruppen von ansonsten technisch identischen Endgeräten nur an vorbestimmte Durchschalteeinheiten anschließbar sind. Das bedeutet, daß die technisch identischen Endgeräte in der Massenproduktion kostengünstig gefertigt werden können, aber durch die Initialisierungsauswertung von den jeweils zugehörigen Durchschalteeinheiten als oder nicht anschaltfähig erkannt werden.

Gemäß der Weiterbildung nach Anspruch 2 können die Durchschalteeinheiten nachträglich derart aufgerüstet werden, so daß an ihnen eine andere Gruppe oder mehrere Gruppen von Endgeräten angeschaltet werden können.

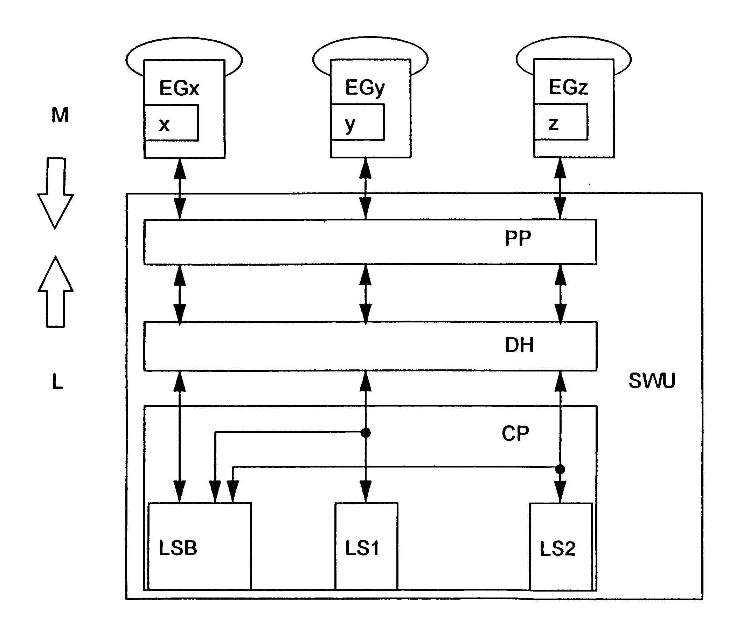

Im folgenden wird die Erfindung anhand eines in der Zeichnung dargestellten Ausführungsbeispieles beschrieben.

In der einzigen Figur sind als Blockschaltbild die für das Verständnis der Erfindung notwendigen Schaltungsteile einer Nebenstellenanlage dargestellt. Dies sind im einzelnen Kommunikationsendgeräte EGx, EGy, EGz, die jeweils über eine Peripherietechnik PP und eine nachgeschaltete Leitungstechnik DH an einer Vermittlungstechnik CP angeschaltet sind. Diese letzten drei Einrichtungen sind Bestandteil einer Durchschalteeinheit SWU. Näheres über diese einzelnen Schaltungsteile sowie über deren Zusammenwirken ist in der eingangs genannten Literaturstelle "ISDN im Büro" beschrieben. Bei den Endgeräten EGx, EGy, EGz handelt es sich beispielsweise um Telefonapparate.

Jedes der Endgeräte EGy, EGy, EGz weist eine sogenannte Gruppen-Kennung x, y, z auf. Diese Kennungen x, y, z sind beispielsweise in einem nichtflüchtigen Speicher abgelegt.

Die Vermittlungstechnik CP weist beispielsweise drei Leistungsmerkmalsysteme auf. Dies sind im einzelnen ein Basisleistungsmerkmalsystem LSB, ein erstes Leistungsmerkmalsystem LS1 und ein zweites Leistngsmerkmalsystem LS2.

Aufgrund eines Tastendruckes an einem der Endgeräte EG wird von diesem eine Aktivierungsmeldung M an eines der Leistungsmerkmalsysteme gegeben, beispielsweise an das Basis-Leistungsmerkmalsystem LSB. Das Leistungsmerkmalsystem LSB stellt daraufhin ein durch diese Aktivierungsmeldung M abgerufenes Leistungsmerkmal L für das Endgerät EG zur Verfügung.

Erfindungsgemäß wird nach dem Anschalten des Endgerätes EGx an die Durchschalteeinheit SWU während der Hochlaufroutine die Gruppen-Kennung x des Endgerätes EGx abgefragt und erkannt. Über die Gruppen-Kennung x ist vorgegeben, daß ein solches Endgerät EGx nur auf die Leistungsmerkmale in dem Basis-Leistungsmerkmalsystem LSB zugreifen kann.

Analoges gilt für die Endgeräte EGy und EGz mit den Kennungen y und z, wobei das Endgerät EGy auf die Leistungsmerkmale aus dem ersten Leistungsmermalsystem LS1 und dem Basis-Leistungsmerkmalsystem LSB und das Endgerät EGz auf die Leistungsmerkmale aus dem zweiten Leistungsmerkmalsystem LS2 und dem Basis-Leistungsmerkmalsystem LSB zugreifen kann.

Die Durchschalteeinheit SWU ist damit derart ausgebildet, daß nur Endgeräte EG mit den Gruppen-Kennungen x oder y oder z angeschaltet werden können. Bei anderen, hier nicht dargestellten Ausführungsformen der Durchschalteeinheit SWU kann auch nur ein einziger Endgerätetyp mit einer einzigen Gruppen-Kennung anschaltfähig sein. Desgleichen kann die Anschaltefähigkeit auch auf eine Vielzahl von Endgerätetypen ausgeweitet werden. Anschaltfähigen Endgeräten EG werden durch die Gruppen-Kennung x, y oder z vorgegebene Leistungsmerkmale zur Verfügung gestellt, wodurch deren Funktionalität im Wesentlichen bestimmt ist.

Erfindungsgemäß wird also durch die Gruppen-Kennung bei der Hochlaufroutine, d.h. in der Endgeräte- bzw. Initialisierungskennung, die Zuordnung zu bestimmten Durchschalteeinheiten durch eine Auswertung der Anschaltfähigkeit durchgeführt. Damit kann bei technisch identischen Endgeräten mit rein durch Software-Kennung gesteuerten Prozessen ohne zusätzlichen Hardware-Aufwand ein Kostensenkungseffekt durch die Erhöhung der Fertigungsstückzahlen erreicht werden.

### Bezugszeichenliste

- CP =: Vermittlungstechnik
- DH =: Leitungstechnik
- EGx, EGy, EGz =: Kommunikationsendgeräte
- L =: Leistungsmerkmal
- LSB =: Basisleistungsmerkmalsystem
- LS1 =: erstes Leistungsmerkmalsystem
- LS2 =: zweites Leistungsmerkmalsystem
- M =: Aktivierungsmeldung
- PP =: Peripherietechnik
- SWU =: Durchschalteeinheit
- x, y, z =: Gruppen-Kennungen

## Patentansprüche

1. Verfahren zur Festlegung von Leistungsmerkmalen für ein an einer Durchschalteeinheit (SWU) angeschaltetes Kommunikations-Endgerät (EG),
bei dem im Endgerät (EG) eine leistungsspezifische Gruppen-Kennung (x, y, z) abgespeichert wird, die nach dem Anschalten des Endgerätes (EG) an die Durchschalteeinheit (SWU) mit einer Vermittlungstechnik (CP) von dieser abgefragt wird, und bei dem durch diese Gruppen-Kennung (x, y, z) die von der Vermittlungstechnik (CP) zur Verfügung gestellten Leistungsmerkmale (L) vorgegeben sind.

2. Verfahren nach Anspruch 1,
bei dem in der Vermittlungstechnik (CP) Leistungsmerkmale (L) für mehr als eine Gruppen-Kennung (x, y, z) abgespeichert und damit abrufbar sind.

3. Kommunikations-Endgerät (EG) zur Verwendung in einem Verfahren nach einem der Ansprüche 1 oder 2, derart ausgestaltet, daß
mindestens eine gespeicherte leistungsspezifische Gruppen-Kennung (x, y, z) abgespeichert ist, wobei, nach dem Anschalten des Endgerätes (EG) an die Durchschalteeinheit (SWU) mit einer Vermittlungstechnik (CP) von dieser die Gruppen-Kennung abfragbar ist, und wobei durch diese Gruppen-Kennung (x, y, z) die von der Vermittlungstechnik (CP) zur Verfügung gestellten Leistungsmerkmale (L) bestimmt sind.

## Claims

1. Method for determining features for a communication terminal (EG) connected to a switching unit (SWU)
wherein in the terminal (EG) is stored a feature-specific group identification code (x, y, z) which, following connection of the terminal (EG) to the switching unit (SWU) having a call processing module (CP), is interrogated by said module and wherein the features (L) made available by the call processing module (CP) are specified by said group identification code (x, y, z).

2. Method according to Claim 1
wherein features (L) for more than one group identification code (x, y, z) are stored in the call processing module (CP) and hence can be called up.

3. Communication terminal (EG) for use in a method according to one of the Claims 1 or 2 embodied in such a way that
at least one feature-specific group identification code (x, y, z) is stored, wherein, following connection of the terminal (EG) to the switching unit (SWU) having a call processing module (CP), the group identification code can be interrogated by said module and wherein the features (L) made available by the call processing module (CP) are specified by said group identification code (x, y, z).

## Revendications

1. Procédé pour la fixation de caractéristiques de puissance pour un terminal de communication (EG) raccordé à une unité de commutation (SWU),
dans lequel on mémorise dans le terminal (EG) un code de groupe (x, y, z) spécifique à la puissance, qui est extrait après la connexion du terminal (EG) à l'unité de commutation (SWU) avec une technique de commutation (CP) par celle-ci, et dans lequel les caractéristiques de puissance (L) mises à disposition par la technique de commutation (CP) sont prédéfinies par ce code de groupe (x, y, z).

2. Procédé selon la revendication 1,
dans lequel les caractéristiques de puissance (L) sont mémorisées dans la technique de commutation (CP) pour plus d'un code de groupe (x, y, z) et peuvent ainsi être extraites.

3. Terminal de communication (EG) pour une utilisation dans un procédé selon l'une quelconque des revendications 1 ou 2, conçu de telle sorte qu'
au moins un code de groupe (x, y, z) mémorisé et spécifique à la puissance est mémorisé, le code de groupe pouvant être extrait après la connexion du terminal (EG) à l'unité de commutation (SWU) avec une technique de commutation (CP) par celle-ci, et les caractéristiques de puissance (L) mises à disposition par la technique de commutation (CP) sont définies par ce code de groupe (x, y, z).
